# FASCICULE DE BREVET EUROPEEN

(11) **EP 2 379 634 B1**
(45) Date de publication et mention de la délivrance du brevet: **20.04.2016**
(21) Numéro de dépôt: 09796714.5
(22) Date de dépôt: 18.12.2009
(51) Int. Cl.: C08K 5/548

(54) **COMPOSITION DE CAOUTCHOUC COMPORTANT UN AGENT DE COUPLAGE MERCAPTOSILANE BLOQUE**
KAUTSCHUKMASSE MIT BLOCKIERTEM MERCAPTOSILAN-KUPPLUNGSMITTEL
RUBBER COMPOUND CONTAINING A BLOCKED MERCAPTOSILANE COUPLING AGENT

(30) Priorité: 22.12.2008 FR 0858930
(43) Date de publication de la demande: 26.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: CAMBON, Stéphanie, F-63400 Chamalieres (FR); LONGCHAMBON, Karine, F-63110 Beaumont (FR); ARAUJO DA SILVA, José, Carlos, F-63430 Pont du Chateau (FR); BELIN, Laure, 63200 Riom (FR)
(74) Mandataire: Cohen, Sylvia
(86) Numéro de dépôt international: PCT/EP2009/067552
(87) Numéro de publication internationale: WO 2010/072683

(56) Documents cités:
- WO-A-2005/007660
- FR-A- 2 873 707
- US-A1- 2003 130 388
- US-A1- 2008 161 458

## Description

La présente invention est relative aux compositions de caoutchoucs diéniques renforcées d'une charge inorganique telle que silice, utilisables notamment pour la fabrication de pneumatiques ou produits semi-finis pour pneumatiques tels que des bandes de roulement.

La vulcanisation des élastomères diéniques par le soufre est largement utilisée dans l'industrie du caoutchouc, en particulier dans celle du pneumatique. Pour vulcaniser les élastomères diéniques, on utilise un système de vulcanisation relativement complexe comportant, en plus du soufre, divers accélérateurs de vulcanisation ainsi qu'un ou plusieurs activateurs de vulcanisation, tout particulièrement des dérivés du zinc tels que l'oxyde de zinc (ZnO), des sels de zinc d'acides gras tels que le stéarate de zinc.

Un objectif à moyen terme des manufacturiers de pneumatiques est de supprimer le zinc ou ses dérivés de leurs formulations de caoutchouterie, en raison du caractère relativement toxique connu de ces composés, notamment vis-à-vis de l'eau et des organismes aquatiques (classement R50 selon directive européenne 67/548/CE du 9 décembre 1996).

Il se trouve toutefois que la suppression de l'oxyde de zinc, spécifiquement dans des compositions de caoutchouc renforcées d'une charge inorganique telle que silice, pénalise très fortement les caractéristiques de mise en oeuvre ("processabilité") des compositions de caoutchouc à l'état cru, avec une réduction du temps de grillage qui est rédhibitoire du point de vue industriel. On rappelle que le phénomène dit de "grillage" conduit rapidement, au cours de la préparation des compositions de caoutchouc dans un mélangeur interne, à des vulcanisations prématurées (*"scorching"*), à des viscosités à l'état cru très élevées, en fin de compte à des compositions de caoutchouc quasiment impossibles à travailler et à mettre en oeuvre industriellement.

Pour répondre au problème de suppression du zinc, il a été certes proposé de remplacer l'oxyde de zinc par un autre oxyde métallique, par exemple MgO, ou encore par un sel ou oxyde d'un métal de transition appartenant aux groupes IIA, IVA, VA, VIA, VIIA ou VIIIA du tableau périodique des éléments, particulièrement cobalt ou nickel (voir documents de brevet US 6,506,827 et WO 2003/054081).

De telles solutions, outre le fait qu'elles ne satisfont pas aux exigences des compositions de caoutchouc renforcées d'une charge inorganique, au moins pour certaines d'entre elles, ne sont pas réellement acceptables à long terme, du point de vue du "développement durable" et de la protection de l'environnement, dans la mesure où elles proposent de remplacer un métal par un autre métal, tout aussi condamné à terme à être dispersé dans la nature avec les débris d'usure des pneumatiques, particulièrement ceux des bandes de roulement résultant inévitablement des divers frottements dus pour l'essentiel aux efforts de freinage, d'accélération, de prises de virage.

Il existe donc de très nombreux agents de couplage pour réaliser la liaison entre une charge inorganique renforçante et un élastomère diénique, or les Demanderesses ont trouvé de façon surprenante que de nouveaux agents de couplage spécifiques permettaient de diminuer de façon très importante le zinc des formulations de caoutchouterie renforcées d'une charge inorganique telle que silice, voire de le supprimer totalement, sans remplacer le zinc par un autre métal et tout en préservant les compositions de caoutchouc du problème de grillage prématuré lors de leur mise en oeuvre industrielle.

En conséquence, un premier objet de l'invention concerne une composition de caoutchouc utilisation pour la fabrication de pneumatiques, ladite composition étant caractérisé en ce qu'elle est dépourvue de zinc ou quasiment dépourvue de zinc (c'est-à-dire contenant moins de 0,5 pce de zinc) et est à base d'au moins un élastomère diénique, une charge renforçante constituée majoritairement par une charge inorganique, un système de réticulation à base de soufre et un agent de couplage constitué par un mercaptosilane bloqué de formule générale I suivante :

(HO)₃₋ₙ R¹ₙ-Si-Z-S-C(=O)-A

dans laquelle :
- R¹, identiques ou différents, représentent chacun un groupe hydrocarboné monovalent choisi parmi les alkyles, linéaires ou ramifiés, les cycloalkyles ou les aryles, ayant de 1 à 18 atomes de carbone;
- A représente l'hydrogène ou un groupe hydrocarboné monovalent choisi parmi les alkyles, linéaires ou ramifiés, les cycloalkyles ou les aryles, ayant de 1 à 18 atomes de carbone,
- Z représente un groupe de liaison divalent comportant de 1 à 18 atomes de carbone,
- n est un nombre entier égale à 0, 1 ou 2.

Avantageusement, l'élastomère diénique étant choisi dans le groupe constitué par les polybutadiènes, les polyisoprènes synthétiques, le caoutchouc naturel, les copolymères de butadiène, les copolymères d'isoprène et les mélanges de ces élastomères.

De préférence, la charge inorganique renforçante est la charge renforçante majoritaire ; et plus préférentiellement c'est une charge siliceuse ou alumineuse.

L'invention concerne aussi un procédé de préparation d'une composition, dépourvue de zinc ou contenant moins de 0,5 pce de zinc, caractérisé en ce qu'on incorpore au moins, par malaxage, à au moins (i) un élastomère diénique, (ii) une charge inorganique à titre de charge renforçante, (iii) un mercaptosilane bloqué générale I suivante :

(HO)₃₋ₙR¹ₙ-Si-Z-S-C(=O)-A

dans laquelle :
- R¹, identiques ou différents, représentent chacun un groupe hydrocarboné monovalent choisi parmi les alkyles, linéaires ou ramifiés, les cycloalkyles ou les aryles, ayant de 1 à 18 atomes de carbone;
- A représente l'hydrogène ou un groupe hydrocarboné monovalent choisi parmi les alkyles, linéaires ou ramifiés, les cycloalkyles ou les aryles, ayant de 1 à 18 atomes de carbone,
- Z représente un groupe de liaison divalent comportant de 1 à 18 atomes de carbone,
- n est un nombre entier égale à 0, 1 ou 2 ;
et (iv) un système de vulcanisation à base de soufre.

L'invention concerne encore un pneumatique ou un produit semi-fini, notamment une bande de roulement comportant une composition de caoutchouc caractérisée en ce qu'elle est dépourvue de zinc ou quasiment dépourvue de zinc et est à base d'au moins un élastomère diénique, une charge renforçante constituée majoritairement par une charge inorganique, un système de réticulation à base de soufre et un agent de couplage constitué par un mercaptosilane bloqué de formule générale I suivante :

(HO)₃₋ₙR¹ₙ-Si-Z-S-C(=O)-A

dans laquelle :
- R¹, identiques ou différents, représentent chacun un groupe hydrocarboné monovalent choisi parmi les alkyles, linéaires ou ramifiés, les cycloalkyles ou les aryles, ayant de 1 à 18 atomes de carbone ;
- A représente l'hydrogène ou un groupe hydrocarboné monovalent choisi parmi les alkyles, linéaires ou ramifiés, les cycloalkyles ou les aryles, ayant de 1 à 18 atomes de carbone,
- Z représente un groupe de liaison divalent comportant de 1 à 18 atomes de carbone,
n est un nombre entier égale à 0, 1 ou 2.

### I. MESURES ET TESTS UTILISES

Les compositions de caoutchouc sont caractérisées, avant et après cuisson, comme indiqué ci-après.

### I-1. Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

### I-2. Temps de grillage

Les mesures sont effectuées à 130°C, conformément à la norme française NF T 43-005. L'évolution de l'indice consistométrique en fonction du temps permet de déterminer le temps de grillage des compositions de caoutchouc, apprécié conformément à la norme précitée par le paramètre T5 (cas d'un grand rotor), exprimé en minutes, et défini comme étant le temps nécessaire pour obtenir une augmentation de l'indice consistométrique (exprimée en UM) de 5 unités au dessus de la valeur minimale mesurée pour cet indice.

### 1-3. Propriétés dynamiques :

Les propriétés dynamiques ΔG* et tan(δ)ₘₐₓ sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349 - 99. On effectue un balayage en amplitude de déformation de 0,1 à 50% (cycle aller), puis de 50% à 0,1% (cycle retour). Les résultats exploités sont le module complexe de cisaillement dynamique (G*) et le facteur de perte (tan δ). Pour le cycle retour, on indique la valeur maximale de tan δ observée (tan(δ)ₘₐₓ), ainsi que l'écart de module complexe (ΔG*) entre les valeurs à 0,1% et à 50% de déformation (effet Payne).

### II. DESCRITION DETAILLEE DE L'INVENTION

Les compositions de l'invention sont donc à base d'au moins : (i) un (au moins un) élastomère diénique, (ii) une (au moins une) charge inorganique titre de charge renforçante, (iii) un (au moins un) mercaptosilane bloqué spécifique de formule générale (I) à titre d'agent de couplage charge inorganique/ élastomère diénique (pce = parties pour cent parties d'élastomère, en poids).

Par l'expression composition "à base de", il faut entendre dans la présente demande une composition comportant le mélange et/ou le produit de réaction des différents constituants utilisés, certains de ces constituants de base (par exemple l'agent de couplage) étant susceptibles de, ou destinés à réagir entre eux, au moins en partie, lors des différentes phases de fabrication des compositions, en particulier au cours de leur vulcanisation (cuisson).

Dans la présente description, sauf indication expresse différente, tous les pourcentages (%) indiqués sont des % en masse.

### II-1. Elastomère diénique

Par élastomère ou caoutchouc "diénique", on entend de manière générale un élastomère issu au moins en partie (i.e. un homopolymère ou un copolymère) de monomères diènes (monomères porteurs de deux doubles liaisons carbone-carbone, conjuguées ou non).

Les élastomères diéniques, de manière connue, peuvent être classés en deux catégories : ceux dits "essentiellement insaturés" et ceux dits "essentiellement saturés". Par élastomère diénique "essentiellement insaturé", on entend un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans cette définition et peuvent être qualifiés au contraire d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di-alkyl(C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle-aromatiques conviennent par exemple le styrène, l'ortho-, méta-, para-méthylstyrène, le mélange commercial "vinyle-toluène", le paratertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

En résumé, de manière particulièrement préférentielle, l'élastomère diénique de la composition conforme à l'invention est choisi dans le groupe des élastomères diéniques (fortement insaturés) constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Selon un mode de réalisation particulier, l'élastomère diénique est majoritairement (i.e., pour plus de 50 pce) un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est majoritairement (pour plus de 50 pce) un élastomère isoprénique. C'est le cas en particulier lorsque les compositions de l'invention sont destinées à constituer, dans les pneumatiques, les matrices de caoutchouc de certaines bandes de roulement (par exemple pour véhicules industriels), de nappes d'armature de sommet (par exemple de nappes de travail, nappes de protection ou nappes de frettage), de nappes d'armature de carcasse, de flancs, de bourrelets, de protecteurs, de sous-couches, de blocs de caoutchouc et autres gommes internes assurant l'interface entre les zones précitées des pneumatiques.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation particulier, notamment lorsqu'elle est destinée à un flanc de pneumatique, à une gomme intérieure étanche de pneumatique sans chambre (ou autre élément imperméable à l'air), la composition conforme à l'invention peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

Selon un autre mode préférentiel de réalisation de l'invention, la composition de caoutchouc comprend un coupage d'un (un ou plusieurs) élastomère diénique dit "à haute Tg" présentant une Tg comprise entre - 70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple de 30 à 100 pce, en particulier de 50 à 100 pce, d'un élastomère à haute Tg en coupage avec 0 à 70 pce, en particulier de 0 à 50 pce, d'un élastomère à basse Tg ; selon un autre exemple, elle comporte pour la totalité des 100 pce un ou plusieurs SBR préparé(s) en solution.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### II-2. Charge inorganique renforçante

Par "charge inorganique renforçante", doit être entendu ici, de manière connue, toute charge inorganique ou minérale, quelles que soient sa couleur et son origine (naturelle ou de synthèse), encore appelée charge "blanche", charge "claire" ou encore charge "non-noire" (*"non-black filler"*) par opposition au noir de carbone, cette charge inorganique étant capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique, en particulier pour bande de roulement ; une telle charge se caractérise généralement, de manière connue, par la présence de groupes hydroxyle (-OH) à sa surface.

Préférentiellement, la charge inorganique renforçante est une charge du type siliceuse ou alumineuse, ou un mélange de ces deux types de charges.

La silice (SiO₂) utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Les silices précipitées hautement dispersibles (dites "HDS") sont préférées, en particulier lorsque l'invention est mise en oeuvre pour la fabrication de pneumatiques présentant une faible résistance au roulement ; comme exemples de telles silices, on peut citer les silices Ultrasil 7000 de la société Degussa, les silices Zeosil 1165 MP, 1135 MP et 1115 MP de la société Rhodia, la silice Hi-Sil EZ150G de la société PPG, les silices Zeopol 8715, 8745 ou 8755 de la Société Huber.

L'alumine (Al₂O₃) renforçante utilisée préférentiellement est une alumine hautement dispersible ayant une surface BET allant de 30 à 400 m²/g, plus préférentiellement entre 60 et 250 m²/g, une taille moyenne de particules au plus égale à 500 nm, plus préférentiellement au plus égale à 200 nm. Comme exemples non limitatifs de telles alumines renforçantes, on peut citer notamment les alumines "Baikalox A125" ou "CR125" (société Baïkowski), "APA-100RDX" (Condéa), "Aluminoxid C" (Degussa) ou "AKP-G015" (Sumitomo Chemicals).

A titre d'autres exemples de charge inorganique susceptible d'être utilisée dans les compositions de caoutchouc des bandes de roulement de l'invention peuvent être encore cités des (oxyde-)hydroxydes d'aluminium, des aluminosilicates, des oxydes de titane, des carbures ou nitrures de silicium, tous du type renforçants tels que décrits par exemple dans les demandes WO 99/28376, WO 00/73372, WO 02/053634, WO 2004/003067, WO 2004/056915.

Lorsque les bandes de roulement de l'invention sont destinées à des pneumatiques à faible résistance au roulement, la charge inorganique renforçante utilisée, en particulier s'il s'agit de silice, a de préférence une surface BET comprise entre 60 et 350 m2/g. Un mode de réalisation avantageux de l'invention consiste à utiliser une charge inorganique renforçante, en particulier une silice, ayant une surface spécifique BET élevée, comprise dans un domaine de 130 à 300 m²/g, en raison du haut pouvoir renforçant reconnu de telles charges. Selon un autre mode préférentiel de réalisation de l'invention, on peut utiliser une charge inorganique renforçante, en particulier une silice, présentant une surface spécifique BET inférieure à 130 m²/g, préférentiellement dans un tel cas comprise entre 60 et 130 m²/g (voir par exemple demandes WO03/002648 et WO03/002649).

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-dessus.

L'homme du métier saura adapter le taux de charge inorganique renforçante selon la nature de la charge inorganique utilisée et selon le type de pneumatique concerné, par exemple pneumatique pour moto, pour véhicule de tourisme ou encore pour véhicule utilitaire tel que camionnette ou Poids lourd. De préférence, ce taux de charge inorganique renforçante sera choisi compris entre 20 et 200 pce, plus préférentiellement entre 30 et 150 pce, en particulier supérieur à 50 pce, et plus préférentiellement encore compris entre 60 et 140 pce.

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1 heure à 160°C - domaine de pression relative *p*/*po* : 0.05 à 0.17). La surface spécifique CTAB est la surface externe déterminée selon la norme française NF T 45-007 de novembre 1987 (méthode B).

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. Comme exemples de telles charges organiques, on peut citer les charges organiques de polyvinylaromatique fonctionnalisé telles que décrites dans les demandes WO 2006/069792 et WO 2006/069793.

La charge inorganique renforçante peut être utilisée également associée à une charge renforçante organique, en particulier du noir de carbone, par exemple un noir du type HAF, ISAF, SAF, conventionnellement utilisé dans les pneumatiques et particulièrement dans les bandes de roulement des pneumatiques (par exemple noirs N115, N134, N234, N326, N330, N339, N347, N375, ou encore, selon les applications visées, les noirs de séries plus élevées, par exemple N660, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère sous la forme d'un masterbatch (voir par exemple demandes WO 97/36724 ou WO 99/16600).

La quantité de noir de carbone présente dans la charge renforçante totale peut varier dans de larges limites, elle est de préférence inférieure à celle de l'hydroxyde métallique renforçant. Avantageusement, on utilise du noir de carbone en très faible proportion, à un taux préférentiel inférieur à 10 pce. Dans les intervalles indiqués, on bénéficie des propriétés colorantes (agent de pigmentation noire) et anti-UV des noirs de carbone, sans pénaliser par ailleurs les performances typiques apportées par la charge inorganique renforçante. Bien entendu, la composition de l'invention elle peut être totalement dépourvue de noir de carbone.

### II-3. Agent de couplage

On rappelle ici que par "agent de couplage" on entend, de manière connue, un agent apte à établir une liaison suffisante, de nature chimique et/ou physique, entre la charge inorganique et l'élastomère diénique ; un tel agent de couplage, au moins bifonctionnel, a par exemple comme formule générale simplifiée "Y-Z-X", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- Z représente un groupe divalent permettant de relier Y et X.

Des agents de couplage, notamment silice/ élastomère diénique ont été décrits dans un très grand nombre de documents, les plus connus étant des organosilanes bifonctionnels porteurs de fonctions alkoxyle (c'est-à-dire, par définition, des "alkoxysilanes") à titre de fonctions "Y" et, à titre de fonctions "X", de fonctions capables de réagir avec l'élastomère diénique telles que par exemple des fonctions polysulfure.

Parmi les composés alkoxysilane-polysulfure connus, doit être particulièrement cité le tétrasulfure de bis 3-triéthoxysilylpropyle (en abrégé "TESPT"), de formule [(C₂H₅O)₃Si(CH₂);S₂]₂, commercialisé notamment par la société Degussa sous la dénomination "Si69" (ou "X50S" lorsqu'il est supporté à 50% en poids sur du noir de carbone), sous la forme d'un mélange commercial de polysulfures Sₓ avec une valeur moyenne pour x qui est proche de 4.

Le TESPT, connu de très longue date, est considéré encore aujourd'hui comme le produit apportant le meilleur compromis en terme de sécurité au grillage, d'hystérèse et de pouvoir renforçant, pour des compositions de caoutchouc renforcées d'une charge inorganique renforçante telle que silice. Il est à ce titre l'agent de couplage de référence de l'homme du métier pour les pneumatiques chargés de silice à basse résistance au roulement, parfois qualifiés de "Pneus Verts" pour l'économie d'énergie offerte (ou *"energy-saving Green Tyres"*).

Cet agent de couplage TESPT ne convient pas aux compositions de l'invention dépourvues de zinc ou quasiment dépourvues de zinc, l'invention ayant révèle que ces dernières nécessitent l'emploi, d'un mercaptosilane bloqué spécifique.

On rappelle ici que les mercaptosilanes bloqués, de manière bien connue de l'homme du métier, sont des précurseurs de silanes susceptibles de former des mercaptosilanes au cours de la préparation des compositions de caoutchouc (voir par exemple US 2002/0115767 A1 ou la demande internationale WO 02/48256). Les molécules de ces précurseurs de silane, dénommées ci-après mercaptosilanes bloqués, ont un groupement bloquant à la place de l'atome d'hydrogène du mercaptosilane correspondant. Les mercaptosilanes bloqués sont susceptibles d'être débloqués par remplacement du groupement bloquant par un atome d'hydrogène, au cours du mélangeage et de la cuisson, pour conduire à la formation d'un mercaptosilane plus réactif, défini comme un silane dont la structure moléculaire contient au moins un groupement thiol (-SH) (mercapto-) lié à un atome de carbone et au moins un atome de silicium. Ces agents de couplage de mercaptosilane bloqué peuvent être utilisés seul ou en présence d'activateur de mercaptosilane bloqué dont le rôle est d'amorcer, d'accélérer ou d'amplifier l'activité du mercaptosilane bloqué.

On utilise le mercaptosilane bloqué spécifique répondant à la formule générale (I):

(HO)₃₋ₙR¹ₙ-Si-Z-S-C(=O)-A

dans laquelle :
- R¹, identiques ou différents, représentent chacun un groupe hydrocarboné monovalent choisi parmi les alkyles, linéaires ou ramifiés, les cycloalkyles ou les aryles, ayant de 1 à 18 atomes de carbone;
- A représente l'hydrogène ou un groupe hydrocarboné monovalent choisi parmi les alkyles, linéaires ou ramifiés, les cycloalkyles ou les aryles, ayant de 1 à 18 atomes de carbone,
- Z représente un groupe de liaison divalent comportant de 1 à 18 atomes de carbone,
- n est un nombre entier égale à 0, 1 ou 2.

Z peut contenir un ou plusieurs hétéroatomes choisis parmi O, S et N.

Avantageusement :
- R¹ est choisi parmi méthyle, éthyle, n-propyle et isopropyle, de préférence parmi méthyle et éthyle ;
- A est choisi parmi les alkyles ayant de 1 à 18 atomes de carbone et le radical phényle,
- Z est choisi parmi les alkylènes en C₁-C₁₈ et les arylènes en C₆-C₁₂.
- n est égal à 1.

Selon un mode de réalisation, Z est choisi parmi les alkylènes en C₁-C₁₀ et plus préférentiellement Z est choisi parmi les alkylènes en C₁-C₄.

Selon un autre mode de réalisation, R¹ est un méthyle.
- Préférentiellement A est choisi parmi les alkyles ayant de 1 à 7 atomes de carbone et le radical phényle

Un agent de couplage qui convient particulièrement bien est le S-octanoyl-mercapto-propyl-dihydroxy-méthylsilane dont la formule (I)° est tel que R1 est un méthyle, Z est un propylène et A est un heptyle.

Les mercaptosilanes bloqués de formule (I) selon l'invention, dans lesquels n est égal à 1, peuvent être préparés selon un procédé de synthèse comportant les étapes suivantes,
- R¹, A, Z ayant la même signification que dans la formule (I),
- et R², identiques ou différents, représentent un groupe hydrocarboné monovalent choisi parmi les alkyles ayant de 1 à 6, de préférence de 1 à 3 :
- on part d'un mercaptosilane bloqué (ci-après produit B) de formule (B):

   (R²O)₂ R¹ Si Z S C(=O) A
- on conduit une hydrolyse en milieu acide permettant d'aboutir au mercaptosilane bloqué de formule (I) visé.

L'homme du métier saura ajuster la teneur en mercaptosilane bloqué de formule (I) en fonction des modes de réalisation particuliers de l'invention, notamment de la quantité de charge inorganique renforçante utilisée, le taux préférentiel représentant entre 2% et 20% en poids par rapport à la quantité de charge inorganique renforçante ; des taux inférieurs à 15% sont plus particulièrement préférés.

Compte tenu des quantités exprimées ci-dessus, de manière générale, la teneur en mercaptosilane bloqué est de préférence comprise entre 2 et 15 pce. En dessous du minima indiqué, l'effet risque d'être insuffisant, alors qu'au-delà du maximum préconisé, on n'observe généralement plus d'amélioration, alors que les coûts de la composition augmentent ; pour ces différentes raisons, cette teneur est plus préférentiellement encore comprise entre 4 et 12 pce.

### II-5. Additifs divers

Les compositions de caoutchouc conformes à l'invention peuvent comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation exclusion faite bien entendu des activateurs à base de zinc (ou dans le respect des 0,5 pce maximum de zinc dans la composition, et de préférence moins de 0,3 pce).

De préférence, ces compositions comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

Ces compositions peuvent également contenir, en complément des agents de couplage, des activateurs de couplage, des agents de recouvrement (comportant par exemple la seule fonction Y) de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des α,ω-dihydroxy-polyorganosiloxanes (notamment des α,ω-dihydroxy-polydiméthylsiloxanes), des acides gras comme par exemple l'acide stéarique.

### II-6. Fabrication des compositions de caoutchouc

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel de l'invention, tous les constituants de base des compositions de l'invention, à l'exception du système de vulcanisation, à savoir la charge inorganique renforçante, l'agent de couplage de formule (I) et le noir de carbone sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

Lorsqu'un agent de recouvrement est utilisé, son incorporation peut être réalisée en totalité pendant la phase non-productive, en même temps que la charge inorganique, ou bien en totalité pendant la phase productive, en même temps que le système de vulcanisation, ou encore fractionnée sur les deux phases successives.

Il convient de noter qu'il est possible d'introduire tout ou partie de l'agent de recouvrement sous une forme supportée (la mise sur support étant réalisée au préalable) sur un solide compatible avec les structures chimiques correspondant à ce composé. Par exemple, lors du fractionnement entre les deux phases successives ci-dessus, il peut être avantageux d'introduire la seconde partie de l'agent de recouvrement, sur le mélangeur externe, après une mise sur support afin de faciliter son incorporation et sa dispersion.

Le système de vulcanisation proprement dit est préférentiellement à base de soufre et d'un accélérateur primaire de vulcanisation, en particulier d'un accélérateur du type sulfénamide. A ce système de vulcanisation peuvent venir s'ajouter, incorporés au cours de la première phase non-productive et/ou au cours de la phase productive, divers accélérateurs secondaires ou activateurs de vulcanisation connus, à l'exclusion du zinc et de tout dérivé de zinc tel que ZnO ou en respectant une teneur en zinc de la composition inférieure à 0,5 pce, et de préférence inférieure à 0,3 pce, tels que par exemple des acides gras comme l'acide stéarique, des dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule tourisme.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

L'invention concerne les compositions de caoutchouc précédemment décrites tant à l'état dit "cru" (i.e., avant cuisson) qu'à l'état dit "cuit" ou vulcanisé (i.e., après réticulation ou vulcanisation). Les compositions conformes à l'invention peuvent être utilisées seules ou en coupage (i.e., en mélange) avec toute autre composition de caoutchouc utilisable pour la fabrication de pneumatiques.

### III. EXEMPLES DE REALISATION DE L'INVENTION

### III-1 Synthèse du S-octanoylmercaptopropyldihydroxymethylsilane

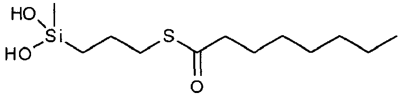

### a) Préparation du S-octanoylmercaptopropyldimethoxymethylsilane de numéro CAS [828241-23-2] :

Le produit intermédiaire G peut être préparé en milieu biphasique selon le mode opératoire décrit dans la demande WO 2005007660. Une autre possibilité consiste à le préparer selon la procédure suivante.

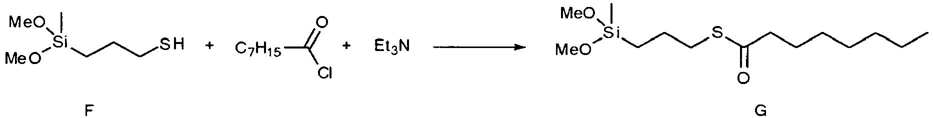

A une solution de 3-mercaptopropyldimethoxymethylsilane F de numéro CAS [31001-77-1] (20,0 g, 0,111 mol) et de triéthylamine (11,2 g, 0,111 mol) dans le cyclohexane (200 mL) maintenue à 5°C sous atmosphère inerte est ajouté goutte à goutte le chlorure d'octanoyle (18,0 g, 0,111 mol) pendant 30 minutes. La température du milieu réactionnelle reste comprise entre 5 et 8°C. Le milieu réactionnel est ensuite agité pendant 15 heures à température ambiante. Le précipité d'hydrochlorure de triéthylamine Et3N*HCl est filtré sur Celite. Après évaporation des solvants sous pression réduite à 25 °C le S-octanoylmercaptopropyldimethoxymethylsilane G de numéro CAS [828241-23-2] (32,6 g, 0,106 mol) est obtenu sous forme d'une huile incolore avec un rendement de 96%.

L'analyse RMN confirme la structure du produit obtenu avec une pureté molaire de 98 %.

### b) Préparation du S-octanoylmercaptopropyldihydroxymethylsilane :

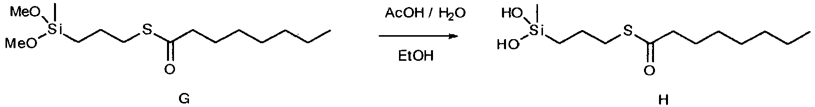

A un mélange d'acide acétique à 0,5 %, d'eau (85 mL) et d'éthanol (250 mL) est ajouté le S-octanoylmercaptopropyldimethoxymethylsilane G (42,0 g, 0,137 mol). La solution est agitée pendant 4 heures à température ambiante puis le mélange est versé sur une solution de chlorure de sodium (70 g) dans l'eau (1600 mL). Le produit est extrait par du diethylether (deux fois 250 mL). Après évaporation des solvants sous pression réduite à 15 °C le solide obtenu est recristallisé dans le pentane (400 mL) à -20°C pendant 4 à 5 heures. Les cristaux sont filtrés et séchés sur filtre pendant 30 min puis 2-3h sous pression réduite. Le produit obtenu (24,9 g) a un point de fusion de 63 °C. Après évaporation du filtrat sous pression réduite à 15 °C le reste obtenu est recristallisé une seconde fois dans le pentane (80 mL) pendant 4-5 heures à -20°C. Cette seconde fraction (6,5 g) à un point de fusion de 63°C.

Les deux fractions sont réunies puis recristallisées dans un mélange éther de pétrole (600 mL), éthanol, (10 mL) pendant 12 heures. Après filtration puis évaporation des solvants résiduels sous pression réduite pendant 2-3 heures, un solide blanc (25,8 g, 0,093 mol, rendement de 68 %) de point de fusion 65 °C est obtenu.

L'analyse RMN confirme la structure du S-octanoylmercaptopropyldihydroxymethylsilane H obtenu avec une pureté molaire supérieure à 93,5 %.

Si une pureté supérieure est requise, une dernière cristallisation dans un mélange éther de pétrole, (500 mL) éthanol (7 mL) pendant 15 heures permet d'obtenir un solide (16,9 g, rendement 44%) de pureté molaire supérieure à 99% (point de fusion 66°C).

### III-2 Synthèse du composé octadécyl-méthyl-dihydroxysilane

Cet exemple illustre la préparation de l'octadécyl-méthyl-dihydroxysilane de formule :

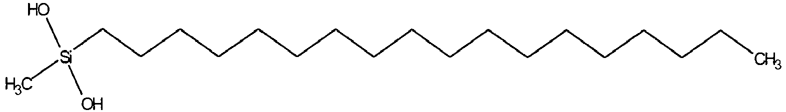

La synthèse de ce composé (N°CAS 7522-59-0) a été réalisée en adaptant le mode opératoire décrit par J.A. Cella et J.C. Carpenter dans "Procedures for the preparation of silanols", Journal of Organometallic Chemistry, 480 (1994), 23-26, pour la préparation de diméthyldihydroxysilane (ou diméthylsilanediol).

On procède plus précisément comme suit. De l'octadécylméthyldichlorosilane [N°CAS 5157-75-5] (1500 g soit 4,08 mol) en solution dans du diéthyl éther anhydre (250 mL) est ajouté goutte à goutte (90 min) sur un mélange d'eau (345 g), de triéthylamine (1138 g) et de diéthyl éther (29 L) maintenu à une température comprise entre -2°C et 6°C. Le mélange est ensuite agité 2 h à une température comprise entre 0°C et 5°C. Le précipité formé est filtré, lavé successivement avec 6 l d'eau déminéralisée, puis 3 fois avec 4 L d'eau déminéralisée. Le solide obtenu est séché à l'air libre jusqu'à ce qu'il atteigne une masse constante. L'octadécylméthyldihydroxysilane ou octadécylméthylsilanediol (1226 g) est ainsi obtenu sous forme d'un solide blanc de point de fusion 87°C avec un rendement de 91%, l'analyse RMN confirmant par ailleurs la structure du produit obtenu avec une pureté molaire à 95 %.

### III-3 Préparation des compositions de caoutchouc

On procède pour les essais qui suivent de la manière suivante: on introduit dans un mélangeur interne, rempli à 70% et dont la température initiale de cuve est d'environ 90°C, l'élastomère diénique (coupage SBR et BR), la silice complétée par une faible quantité de noir de carbone, l'agent de couplage puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute l'agent de recouvrement (lorsque ce dernier est présent) et le système de vulcanisation (soufre et accélérateur sulfénamide) sur un mélangeur externe (homo-finisseur) à 70°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### III-4 Caractérisation des compositions de caoutchouc

Cet essai a pour but de démontrer les propriétés améliorées d'une composition de caoutchouc dépourvue de zinc selon l'invention comparée à des compositions de caoutchouc dépourvues de zinc mais utilisant des agents de couplage traditionnellement utilisés dans les compositions de caoutchouc pour bandes de roulement de pneumatiques ayant de la silice à titre de charge renforçante.

On prépare pour cela 7 compositions à base d'un élastomère diénique (coupage SBR/BR) renforcées d'une silice hautement dispersible (HDS), ces compositions différant essentiellement par les caractéristiques techniques qui suivent :
- la composition C1 est une composition témoin « classique » contenant du zinc (1,5 pce de ZnO) et le composé TESPT (nom commercial : « Si69 ») à titre d'agent de couplage
- la composition C2 correspond à la composition C1 mais dépourvue de zinc,
- la composition C3 est dépourvue de zinc et comprend le composé MESPT (nom commercial : « RP74 ») fréquemment utilisé dans les bandes de roulement de pneumatique, à titre d'agent de couplage
- la composition C4 est dépourvue de zinc et comprend un mercaptosilane bloqué (nom commercial : « Silane NXT ») distinct de l'invention, à titre d'agent de couplage,
- la composition C5 conforme à l'invention, est dépourvue de zinc et comprend du S-octanoyl-mercapto-propyl-dihydroxy-méthylsilane à titre d'agent de couplage,
- la composition C6 conforme à l'invention, est dépourvue de zinc et comprend du S-octanoyl-mercapto-propyl-dihydroxy-méthylsilane à titre d'agent de couplage ainsi qu'un agent de recouvrement, l'octadécyl-diméthyl-hydroxysilane,
- la composition C7 conforme à l'invention, comprend les mêmes composés que la composition C5, le taux d'agent de couplage étant supérieur à celui compris dans la composition C5.

Seules les compositions C5, C6 et C7 sont donc conformes à l'invention.

Afin que les propriétés des compositions C1 à C6 soient comparables, les agents de couplage des compositions C2 à C6 sont utilisés à un taux isomolaire en silicium comparativement à la composition témoin C1.
La composition C7 comporte un taux d'agent de couplage supérieur à celui de la composition C5 comportant le même agent de couplage conforme à l'invention, afin d'identifier l'effet particulier de l'augmentation de ce taux.

L'agent de couplage conventionnel utilisé dans la composition témoin C1 est le TESPT. On rappelle que le TESPT est le tétrasulfure de bis(3-triéthoxysilylpropyl) ayant pour formule développée (Et = éthyle) :

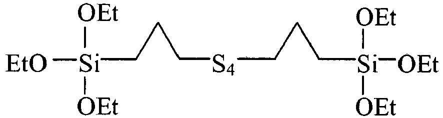

L'agent de couplage utilisé dans la composition C3 est le MESPT. On rappelle que le MESPT est le tétrasulfure de bis(3-diméthyléthoxysilylpropyl) ayant pour formule développée (Et = éthyle) :

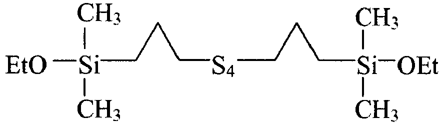

L'agent de couplage utilisé dans la composition C4 est le Silane NXT. On rappelle que le NXT est le S-octanoylmercaptopropyltriéthoxysilane ayant pour formule développée (Et = éthyle) :

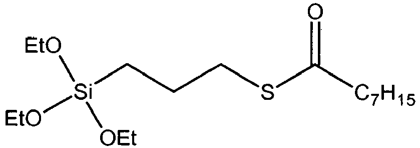

Les tableaux 1 et 2 donnent la formulation des différentes compositions (tableau 1 - taux des différents produits exprimés en pce ou parties en poids pour cent parties d'élastomère) ainsi que leurs propriétés avant et après cuisson (environ 40 min à 150°C) ; le système de vulcanisation est constitué par soufre et sulfénamide.

L'examen des résultats du tableau 2 concernant les propriétés avant cuisson montre tout d'abord que seules les compositions conforment à l'invention C5 à C7, comportant un mercaptosilane bloqué de formule générale (I), comparées à la composition témoin C1 qui contient le taux classiquement utilisé de zinc, permettent à la fois de maintenir un temps de grillage T5 acceptable (quasiment identique à celui de C1), tout en améliorant de façon remarquable la processabilité de la composition (Mooney beaucoup plus faible que pour la composition C1).
Les autres compositions C2, C3 ou C4 ayant des propriétés rédhibitoires pour leur utilisation en pneumatique à cause d'un temps de grillage beaucoup trop faible et présentant, de plus, pour les compositions C2 et C3 une très grande viscosité à cru (Mooney très élevé).

Par ailleurs, l'observation des propriétés après cuisson de ces compositions montre de façon tout à fait remarquable pour les compositions C5, C6 et C7 conformes à l'invention, comparées à la composition témoin C1, une hystérèse réduite, comme attesté par des valeurs de tan(δ)ₘₐₓ et ΔG* qui sont sensiblement diminuées ; ceci est un indicateur reconnu d'une réduction de la résistance au roulement des pneumatiques, et par voie de conséquence d'une diminution de la consommation d'énergie des véhicules automobiles équipés de tels pneumatiques.
Ceci est particulièrement notable pour la composition C6 comportant à la fois un agent de couplage conforme à l'invention et un agent de recouvrement, et pour la composition C7 dans laquelle le taux d'agent de couplage a été augmenté par rapport à la composition C5 conforme à l'invention.

On peut noter que la composition C4, non conforme à l'invention, présente également une hystérèse réduite par rapport à la composition C1, cependant cette propriété n'est pas exploitable en l'occurrence étant donné le très faible temps de grillage de la composition C4 qui la rend inutilisable en pneumatique.

Il apparaît clairement qu'une composition conforme comportant à titre d'agent de couplage un mercaptosilane bloqué de formule (I) permet d'obtenir des propriétés équivalentes, voire améliorées (processabilité, hystérèse) par rapport à la composition classique témoin, sans utiliser de zinc contrairement à des compositions comportant d'autres agents de couplage y compris des mercaptosilanes bloqués mais de formule distincte de celle de l'invention.

On peut noter par ailleurs que l'utilisation d'un mercaptosilane bloqué conforme à l'invention, est particulièrement intéressante du point de vue de l'environnement. Elle permet à la fois de pallier les problèmes dus à la suppression du zinc, et de régler le problème de dégagement de VOC (« volatile organic compounds »). En effet, le mercaptosilane bloqué conforme à l'invention ne possède aucun groupe alcoxyle (tel que les groupes éthoxyles du TESPT) étant en effet à l'origine du dégagement d'alcool (éthanol dans le cas du TESPT), tant au cours de la fabrication des compositions de caoutchouc elles-mêmes que lors de la cuisson des articles en caoutchouc incorporant ces compositions.

**Tableau 1**

| **Composition N°** | **C1** | **C2** | **C3** | **C4** | **C5** | **C6** | **C7** |
|---|---|---|---|---|---|---|---|
| SBR (1) | 70 | 70 | 70 | 70 | 70 | 70 | 70 |
| BR (2) | 30 | 30 | 30 | 30 | 30 | 30 | 30 |
| Silice (3) | 80 | 80 | 80 | 80 | 80 | 80 | 80 |
| agent de couplage (4) | 6,4 | 6,4 | - | - | - | - | - |
| agent de couplage (5) | - | - | 4,9 | - | - | - | - |
| agent de couplage (6) | - | - | - | 8,9 | - | - | - |
| agent de couplage (7) | - | - | - | - | 6,8 | 6,8 | 8,3 |
| silane (8) | - | - | - | - | - | 1,7 | - |
| noir de carbone (9) | 5 | 5 | 5 | 5 | 5 | 5 | 5 |
| huile MES (10) | 6 | 6 | 6 | 6 | 6 | 6 | 6 |
| résine plastifiante (11) | 20 | 20 | 20 | 20 | 20 | 20 | 20 |
| DPG (12) | 1,5 | 1,5 | 1,5 | 1,5 | 1,5 | 1,5 | 1,5 |
| cire anti-ozone (13) | 1,5 | 1,5 | 1,5 | 1,5 | 1,5 | 1,5 | 1,5 |
| ZnO (14) | 1,5 | - | - | | - | - | - |
| anti-oxydant (15) | 2 | 2 | 2 | 2 | 2 | 2 | 2 |
| acide stéarique (16) | 2 | 2 | 2 | 2 | 2 | 2 | 2 |
| soufre | 1 | 1 | 1 | 1 | 1 | 1 | 1 |
| accélérateur (17) | 2 | 2 | 2 | 2 | 2 | 2 | 2 |

| | | | | | | | |
|---|---|---|---|---|---|---|---|
| (1) SSBR avec 25% de styrène, 59% de motifs polybutadiène 1-2 et 20% de motifs polybutadiènes 1-4 trans (Tg = -24°C) ; taux exprimé en SBR sec (SBR étendu avec 9% d'huile MES, soit un total de SSBR + huile égal à 76 pce) ; (2) BR (Nd) avec 0,7% de 1-2 ; 1,7% de trans 1-4 ; 98% de cis 1-4 (Tg = -105°C) (3) silice "ZEOSIL 1165 MP" de la société Rhodia sous forme de microperles (BET et CTAB : environ 150-160 m2/g) ; (4) TESPT ("SI69" de la société Degussa) ; (5) MESPT ("RP74" de la société Rhodia) ; (6) S-octanoylmercaptopropyltriethoxysilane ("Silane NXT™" de GE Silicones) ; (7) S-octanoylmercaptopropyldihydroxymethylsilane (produit synthétisé) ; (8) octadécyl-méthyl-dihydroxysilane (produit synthétisé) ; (9) N234 (société Degussa) ; (10) huile MES ("Catenex SNR" de Shell) ; (11) résine polylimonène ("Dercolyte L120" de la société DRT) ; (12) diphénylguanidine (Perkacit DPG de la société Flexsys) ; (13) mélange de cires anti-ozone macro- et microcristallines ; (14) oxyde de zinc (grade industriel - société Umicore) ; (15) N-1,3-diméthylbutyl-N-phényl-para-phénylènediamine ("Santoflex 6-PPD" de la société Flexsys) ; (16) stéarine ("Pristerene 4931" - société Uniqema) ; (17) N-cyclohexyl-2-benzothiazyl-sulfénamide ("Santocure CBS" de la société Flexsys). | | | | | | | |

**Tableau 2**

| Composition N° | C1 | C2 | C3 | C4 | C5 | C6 | C7 |
|---|---|---|---|---|---|---|---|
| *Propriétés avant cuisson* | | | | | | | |
| Mooney (UM) | 95 | 101 | 115 | 76 | 73 | 65 | 69 |
| T5 (min) | 18 | 11 | 14 | 12 | 16 | 17 | 17 |

| *Propriétés après cuisson* | | | | | | | |
|---|---|---|---|---|---|---|---|
| ΔG* (MPa) | 5,81 | 5,27 | 4,39 | 3,59 | 4,61 | 3,14 | 3,47 |
| tan(δ)ₘₐₓ | 0,354 | 0,362 | 0,346 | 0,331 | 0,351 | 0,323 | 0,329 |

## Revendications

1. Composition de caoutchouc dépourvue de zinc ou contenant moins de 0,5 pce de zinc, utilisable pour la fabrication de pneumatiques, à base d'au moins :
- un élastomère diénique,
- un système de réticulation à base de soufre,
- une charge inorganique à titre de charge renforçante,
- un mercaptosilane bloqué de formule générale I suivante :
(HO)₃₋₁R¹ₙ-Si-Z-S-C(=O)-A
dans laquelle :
- R¹, identiques ou différents, représentent chacun un groupe hydrocarboné monovalent choisi parmi les alkyles, linéaires ou ramifiés, les cycloalkyles ou les aryles, ayant de 1 à 18 atomes de carbone;
- A représente l'hydrogène ou un groupe hydrocarboné monovalent choisi parmi les alkyles, linéaires ou ramifiés, les cycloalkyles ou les aryles, ayant de 1 à 18 atomes de carbone,
- Z représente un groupe de liaison divalent comportant de 1 à 18 atomes de carbone,
- n est un nombre entier égal à 0, 1 ou 2.

2. Composition selon la revendication 1, dans laquelle n est égal à 1.

3. Composition selon l'une quelconque des revendications 1 ou 2, dans laquelle Z contient un ou plusieurs hétéroatomes choisis parmi O, S et N.

4. Composition selon l'une quelconque des revendications 1 à 3, dans laquelle :
- R¹ est choisi parmi méthyle, éthyle, n-propyle et isopropyle, de préférence parmi méthyle et éthyle ;
- A est choisi parmi les alkyles ayant de 1 à 18 atomes de carbone et le radical phényle
- Z est choisi parmi les alkylènes en C₁-C₁₈ et les arylènes en C₆-C₁₂.

5. Composition selon la revendication 4, dans laquelle Z est choisi parmi les alkylènes en C₁-C₁₀.

6. Composition selon la revendication 5, dans laquelle Z est choisi parmi les alkylènes en C₁-C₄.

7. Composition selon l'une quelconque des revendications 4 à 6, dans laquelle R1 est un méthyle.

8. Composition selon l'une quelconque des revendications 4 à 7, dans laquelle A est choisi parmi les alkyles ayant de 1 à 7 atomes de carbone et le radical phényle.

9. Composition selon l'une quelconque des revendications 4 à 8, dans laquelle R1 est un méthyle, Z est un propylène et A est un heptyle.

10. Composition selon l'une quelconque des revendications 1 à 9, dans laquelle l'élastomère diénique étant choisi dans le groupe constitué par les polybutadiènes, les polyisoprènes synthétiques, le caoutchouc naturel, les copolymères de butadiène, les copolymères d'isoprène et les mélanges de ces élastomères.

11. Composition selon l'une quelconque des revendications 1 à 10, dans laquelle la charge inorganique renforçante est la charge renforçante majoritaire.

12. Composition selon l'une quelconque des revendications 1 à 11, dans laquelle la charge inorganique renforçante est une charge siliceuse ou alumineuse.

13. Composition selon l'une quelconque des revendications 1 à 12, dans laquelle la quantité de charge inorganique renforçante étant supérieure à 50 pce, de préférence comprise entre 60 et 140 pce.

14. Composition selon l'une quelconque des revendications 1 à 13, dans laquelle le taux d'agent de couplage représente entre 2% et 20% en poids par rapport à la quantité de charge inorganique renforçante; de préférence ce taux est inférieur à 15.

15. Composition selon l'une quelconque des revendications 1 à 14, dans laquelle %. le taux d'agent de couplage étant compris entre 2 et 15 pce, de préférence entre 4 et 12 pce.

16. Procédé de préparation d'une composition, dépourvue de zinc ou contenant moins de 0,5 pce de zinc, **caractérisé en ce qu'**on incorpore au moins, par malaxage, à au moins (i) un élastomère diénique, (ii) une charge inorganique à titre de charge renforçante, (iv) un mercaptosilane bloqué de formule générale I suivante :
(HO)₃₋ₙR¹ₙ-Si-Z-S-C(=O)-A
dans laquelle :
- R¹, identiques ou différents, représentent chacun un groupe hydrocarboné monovalent choisi parmi les alkyles, linéaires ou ramifiés, les cycloalkyles ou les aryles, ayant de 1 à 18 atomes de carbone;
- A représente l'hydrogène ou un groupe hydrocarboné monovalent choisi parmi les alkyles, linéaires ou ramifiés, les cycloalkyles ou les aryles, ayant de 1 à 18 atomes de carbone,
- Z représente un groupe de liaison divalent comportant de 1 à 18 atomes de carbone,
- n est un nombre entier égale à 0, 1 ou 2 ;
et (iv) un système de vulcanisation à base de soufre.

17. Procédé selon la revendication 16, **caractérisé en ce qu'**il comporte les étapes suivantes :
- incorporer à l'élastomère diénique, dans un mélangeur, la charge renforçante et le mercaptosilane bloqué en malaxant thermomécaniquement le tout, en une ou plusieurs fois, jusqu'à atteindre une température maximale comprise entre 130°C et 200°C,
- refroidir l'ensemble à une température inférieure à 100°C,
- incorporer ensuite : le système de vulcanisation;
- malaxer le tout jusqu'à une température maximale inférieure à 120°C ;
extruder ou calandrer la composition de caoutchouc ainsi obtenue.

18. Procédé selon la revendication 17, dans lequel un agent de recouvrement est introduit en totalité ou de façon fractionnée pendant la première phase.

19. Procédé selon la revendication 17, dans lequel un agent de recouvrement est introduit en totalité ou de façon fractionnée pendant la deuxième phase.

20. Pneumatique ou produit semi-fini comportant une composition de caoutchouc selon l'une quelconque des revendications 1 à 15.

21. Bande de roulement de pneumatique comportant une composition de caoutchouc selon l'une quelconque des revendications 1 à 15.

## Patentansprüche

1. Kautschukzusammensetzung, die frei von Zink ist oder weniger als 0,5 phe Zink enthält und zur Herstellung von Reifen verwendet werden kann, auf Basis von mindestens:
- einem Dienelastomer,
- einem Vernetzungssystem auf Basis von Schwefel,
- einem anorganischen Füllstoff als verstärkenden Füllstoff,
- einem blockierten Mercaptosilan der folgenden allgemeinen Formel I:
(HO)₃₋ₙR¹ₙ-Si-Z-S-C(=O)-A
worin:
- die Variablen R¹ gleich oder verschieden sind und jeweils für eine einwertige Kohlenwasserstoffgruppe, die aus linearen und verzweigten Alkylresten, Cycloalkylresten oder Arylresten mit 1 bis 18 Kohlenstoffatomen ausgewählt ist, stehen,
- A für Wasserstoff oder eine einwertige Kohlenwasserstoffgruppe, die aus linearen und verzweigten Alkylresten, Cycloalkylresten oder Arylresten mit 1 bis 18 Kohlenstoffatomen ausgewählt ist, steht,
- Z für eine zweiwertige Verbindungsgruppe mit 1 bis 18 Kohlenstoffatomen steht,
- n eine ganze Zahl mit einem Wert von 0, 1 oder 2 ist.

2. Zusammensetzung nach Anspruch 1, wobei n gleich 1 ist.

3. Zusammensetzung nach Anspruch 1 oder 2, wobei Z ein oder mehrere Heteroatome, die aus 0, S und N ausgewählt sind, enthält.

4. Zusammensetzung nach einem der Ansprüche 1 bis 3, wobei:
- R¹ aus Methyl, Ethyl, n-Propyl und Isopropyl, vorzugsweise aus Methyl und Ethyl, ausgewählt ist,
- A aus Alkylresten mit 1 bis 18 Kohlenstoffatomen und dem Phenylrest ausgewählt ist,
- Z aus C₁-C₁₈-Alkylenresten und C₆-C₁₂-Arylenresten ausgewählt ist.

5. Zusammensetzung nach Anspruch 4, wobei Z aus C₁-C₁₀-Alkylenresten ausgewählt ist.

6. Zusammensetzung nach Anspruch 5, wobei Z aus C₁-C₄-Alkylenresten ausgewählt ist.

7. Zusammensetzung nach einem der Ansprüche 4 bis 6, wobei R¹ für Methyl steht.

8. Zusammensetzung nach einem der Ansprüche 4 bis 7, wobei A aus Alkylresten mit 1 bis 7 Kohlenstoffatomen und dem Phenylrest ausgewählt ist.

9. Zusammensetzung nach einem der Ansprüche 4 bis 8, wobei R¹ für Methyl steht, Z für Propylen steht und A für Heptyl steht.

10. Zusammensetzung nach einem der Ansprüche 1 bis 9, wobei das Dienelastomer aus der Gruppe bestehend aus Polybutadienen, synthetischen Polyisoprenen, Naturkautschuk, Butadien-Copolymeren, Isopren-Copolymeren und Mischungen dieser Elastomere ausgewählt ist.

11. Zusammensetzung nach einem der Ansprüche 1 bis 10, wobei es sich bei dem verstärkenden anorganischen Füllstoff um den hauptsächlichen verstärkenden Füllstoff handelt.

12. Zusammensetzung nach einem der Ansprüche 1 bis 11, wobei es sich bei dem verstärkenden anorganischen Füllstoff um einen silicium- oder aluminiumhaltigen Füllstoff handelt.

13. Zusammensetzung nach einem der Ansprüche 1 bis 12, wobei der Gehalt an verstärkendem anorganischem Füllstoff größer als 50 phe ist und vorzugsweise zwischen 60 und 140 phe liegt.

14. Zusammensetzung nach einem der Ansprüche 1 bis 13, wobei der Gehalt an Kupplungsmittel zwischen 2 und 20 Gew.-%, bezogen auf die Menge von verstärkendem anorganischem Füllstoff, liegt, wobei dieser Gehalt vorzugsweise kleiner als 15% ist.

15. Zusammensetzung nach einem der Ansprüche 1 bis 14, wobei der prozentuale Gehalt an Kupplungsmittel zwischen 2 und 15 phe und vorzugsweise zwischen 4 und 12 phe liegt.

16. Verfahren zur Herstellung einer Zusammensetzung, die frei von Zink ist oder weniger als 0,5 phe Zink enthält, **dadurch kennzeichnet, dass** man durch Kneten in mindestens (i) ein Dienelastomer mindestens (ii) einen anorganischen Füllstoff als verstärkenden Füllstoff, (iv) ein blockiertes Mercaptosilan der folgenden allgemeinen Formel I:
(HO)₃₋ₙR¹ₙ-Si-Z-S-C(=O)-A
worin:
- die Variablen R¹ gleich oder verschieden sind und jeweils für eine einwertige Kohlenwasserstoffgruppe, die aus linearen und verzweigten Alkylresten, Cycloalkylresten oder Arylresten mit 1 bis 18 Kohlenstoffatomen ausgewählt ist, stehen,
- A für Wasserstoff oder eine einwertige Kohlenwasserstoffgruppe, die aus linearen und verzweigten Alkylresten, Cycloalkylresten oder Arylresten mit 1 bis 18 Kohlenstoffatomen ausgewählt ist, steht,
- Z für eine zweiwertige Verbindungsgruppe mit 1 bis 18 Kohlenstoffatomen steht,
- n eine ganze Zahl mit einem Wert von 0, 1 oder 2 ist;
und (iv) ein Vulkanisationssystem auf Basis von Schwefel einarbeitet.

17. Verfahren nach Anspruch 16, **dadurch gekennzeichnet, dass** es folgende Schritte umfasst:
- Einarbeiten des verstärkenden Füllstoffs und des blockierten Mercaptosilans in das Dienelastomer in einem Mischer durch ein- oder mehrmaliges thermomechanisches Kneten des Ganzen bis zum Erreichen einer Maximaltemperatur zwischen 130°C und 200°C,
- Abkühlen des Ganzen auf eine Temperatur von weniger als 100°C,
- anschließendes Einarbeiten des Vulkanisationssystems,
- Kneten des Ganzen bis zum Erreichen einer Maximaltemperatur von weniger als 120°C,
- Extrudieren oder Kalandrieren der so erhaltenen Kautschukzusammensetzung.

18. Verfahren nach Anspruch 17, bei dem in der ersten Phase ein Beschichtungsmittel ganz oder teilweise eingetragen wird.

19. Verfahren nach Anspruch 17, bei dem in der zweiten Phase ein Beschichtungsmittel ganz oder teilweise eingetragen wird.

20. Reifen oder Halbzeug, umfassend eine Kautschukzusammensetzung nach einem der Ansprüche 1 bis 15.

21. Reifenlauffläche, umfassend eine Kautschukzusammensetzung nach einem der Ansprüche 1 bis 15.

## Claims

1. Rubber composition that is free of zinc or that contains less than 0.5 phr of zinc, which can be used for the manufacture of tyres, based on at least:
- one diene elastomer;
- one sulphur-based crosslinking system;
- one inorganic filler as reinforcing filler;
- one blocked mercaptosilane of general formula I below:
(HO)₃₋ₙR¹ₙ-Si-Z-S-C(=O)-A
in which:
- R¹, which are identical or different, each represent a monovalent hydrocarbon-based group chosen from alkyls, which are linear or branched, cycloalkyls or aryls, having from 1 to 18 carbon atoms;
- A represents hydrogen or a monovalent hydrocarbon-based group chosen from alkyls, which are linear or branched, cycloalkyls or aryls, having from 1 to 18 carbon atoms;
- Z represents a divalent bonding group comprising from 1 to 18 carbon atoms;
- n is an integer equal to 0, 1 or 2.

2. Composition according to Claim 1, in which n is equal to 1.

3. Composition according to either of Claims 1 and 2, in which Z contains one or more heteroatoms chosen from O, S and N.

4. Composition according to any one of Claims 1 to 3, in which:
- R¹ is chosen from methyl, ethyl, n-propyl and isopropyl, preferably from methyl and ethyl;
- A is chosen from alkyls having from 1 to 18 carbon atoms and the phenyl radical;
- Z is chosen from C₁-C₁₈ alkylenes and C₆-C₁₂ arylenes.

5. Composition according to Claim 4, in which Z is chosen from C₁-C₁₀ alkylenes.

6. Composition according to Claim 5, in which Z is chosen from C₁-C₄ alkylenes.

7. Composition according to any one of Claims 4 to 6, in which R¹ is a methyl.

8. Composition according to any one of Claims 4 to 7, in which A is chosen from alkyls having from 1 to 7 carbon atoms and the phenyl radical.

9. Composition according to any one of Claims 4 to 8, in which R¹ is a methyl, Z is a propylene and A is a heptyl.

10. Composition according to any one of Claims 1 to 9, in which the diene elastomer being chosen from the groups consisting of polybutadienes, synthetic polyisoprenes, natural rubber, butadiene copolymers, isoprene copolymers and mixtures of these elastomers.

11. Composition according to any one of Claims 1 to 10, in which the reinforcing inorganic filler is the predominant reinforcing filler.

12. Composition according to any one of Claims 1 to 11, in which the reinforcing inorganic filler is a siliceous or aluminous filler.

13. Composition according to any one of Claims 1 to 12, in which the amount of reinforcing inorganic filler being greater than 50 phr, preferably between 60 and 140 phr.

14. Composition according to any one of Claims 1 to 13, in which the content of coupling agent represents between 2% and 20% by weight relative to the amount of reinforcing inorganic filler; preferably this content is less than 15.

15. Composition according to any one of Claims 1 to 14, in which %. the content of coupling agent being between 2 and 15 phr, preferably between 4 and 12 phr.

16. Process for preparing a composition that is free of zinc or that contains less than 0.5 phr of zinc, **characterized in that**, incorporated at least, by kneading, into at least (i) one diene elastomer, are (ii) an inorganic filler as reinforcing filler, (iv) a blocked mercaptosilane of general formula I below:
(HO)₃₋ₙR¹ₙ-Si-Z-S-C(=O)-A
in which:
- R¹, which are identical or different, each represent a monovalent hydrocarbon-based group chosen from alkyls, which are linear or branched, cycloalkyls or aryls, having from 1 to 18 carbon atoms;
- A represents hydrogen or a monovalent hydrocarbon-based group chosen from alkyls, which are linear or branched, cycloalkyls or aryls, having from 1 to 18 carbon atoms;
- Z represents a divalent bonding group comprising from 1 to 18 carbon atoms;
- n is an integer equal to 0, 1 or 2;
and (iv) a sulphur-based vulcanization system.

17. Process according to Claim 16, **characterized in that** it comprises the following steps:
- incorporating into the diene elastomer, in a mixer, the reinforcing filler and the blocked mercaptosilane by thermomechanically kneading all the ingredients, one or more times, until a maximum temperature between 130°C and 200°C is reached;
- cooling the mixture down to a temperature below 100°C;
- then incorporating: the vulcanization system;
- kneading everything up to a maximum temperature below 120°C; and
- extruding or calendering the rubber composition thus obtained.

18. Process according to Claim 17, in which a covering agent is introduced completely or partly during the first phase.

19. Process according to Claim 17, in which a covering agent is introduced completely or partly during the second phase.

20. Tyre or semi-finished product comprising a rubber composition according to any one of Claims 1 to 15.

21. Tyre tread comprising a rubber composition according to any one of Claims 1 to 15.
